# EUROPEAN PATENT APPLICATION

(11) **EP 1 519 316 A2**
(43) Date of publication of application: **30.03.2005**
(21) Application number: 04255185.3
(22) Date of filing: 27.08.2004
(51) Int. Cl.: G06T 11/00

(54) **Apparatus and method for generating image, a computer program and a computer readable storage medium**

(30) Priority: 27.08.2003 JP 2003303337
(71) Applicant: SONY CORPORATION, Tokyo (JP)
(72) Inventor: Shirai, Katsuya, Shinagawa-ku, Tokyo (JP); Sako, Yoichiro, Shinagawa-ku, Tokyo (JP); Terauchi, Toshiro, Shinagawa-ku, Tokyo (JP); Inoue, Makoto, Shinagawa-ku, Tokyo (JP); Miyajima, Yasushi, Shinagawa-ku, Tokyo (JP); Makino, Kenichi, Shinagawa-ku, Tokyo (JP); Takai, Motoyuki, Shinagawa-ku, Tokyo (JP); Inoue, Akiko, Shinagawa-ku, Tokyo (JP)
(74) Representative: Smith, Samuel Leonard

(57) **Abstract**

An image-generating unit receives numerical values and outputs an image that varies according to changes in the numerical values. The numerical values are bio-information measured by a bio-information sensor and environmental information measured by an environmental sensor. Since the bio-information and the environmental information are variables whose changes are unpredictable, an output image changes in a variety of forms. The image generated by the image-generating unit is displayed on a displaying unit.

## Description

The present invention relates to an apparatus and method for generating and displaying a varying image.

Screen savers of personal computers are software programs that protect monitor screens from burn-in and enhance their entertainment value by changing display patterns of geometric representation, letters, images, or the like. Recently, there have been devices for displaying ornamental images of, for example, tropical fish, or starry skies. These devices have been utilized as interior items.

In a screen saver, a predetermined image is deformed and moved in accordance with a simple rule. Therefore, changes in the image are so monotonous that the image is unsuitable for long viewing. In a device for displaying an ornamental image, an image recorded in a recording medium in advance appears on a high-quality display unit. Therefore, variations on a screen are small and only set images are available.

Furthermore, recently, there have been devices for receiving musical input and converting images according to changes in sound levels or pitches. One such device includes an action database for recording an action of an articulate body, a pitch detection unit for detecting a pitch from input music, a sound-level detection unit for detecting a sound level from input music, and an action generation unit for retrieving action data from the action database and generating an action. This device moves a joint of the articulate body according to a sound level or a pitch and generates an image in synchronism with music (see, for example, Japanese Unexamined Patent Application Publication No. 8-293039).

There is a device for raising a virtual pet. This device has a bio-information measurement unit for measuring bio-information about a user, and a development scenario for the virtual pet is selected on the basis of the measurement result of bio-information (see, for example, Japanese Unexamined Patent Application Publication No. 11-065417). In this device, an image that changes according to the stage of development of the virtual pet is displayed.

However, the device disclosed in Japanese Unexamined Patent Application Publication No. 8-293039 has limited patterns of displayed images since an image to be displayed is only selected from images recorded on the action database. In the device disclosed in Japanese Unexamined Patent Application Publication No. 11-065417, bio-information about a user is used only for selecting a development scenario from scenarios prepared in advance, and therefore, a displayed state is restricted by the number of the scenarios.

Accordingly, it is an object of the present invention to provide an apparatus and method for generating an image and sound that change in a variety of forms, displaying the image, and outputting the sound.

According to a first aspect of the present invention, an apparatus for generating an image includes an acquiring unit for acquiring a variable value that changes unpredictably, an image-generating unit for generating an image on the basis of the variable value, and a displaying unit for displaying the generated image. According to a second aspect of the present invention, a method for generating an image includes acquiring a variable value that changes unpredictably, generating an image on the basis of the variable value, and displaying the generated image on a displaying unit.

According to the present invention, an image is generated on the basis of a variable value, such as bio-information, or environmental information, and therefore, a varying image can be generated. Also, acquiring a variable value from another user through a network further increases the number of variations in the displayed image.
Fig. 1 illustrates a concept of the present invention;
Fig. 2 is a block diagram of an apparatus for generating an image according to the present invention;
Figs. 3A to 3C are block diagrams showing the internal structure of an image-generating unit according to a first embodiment;
Fig. 4 is a block diagram showing the internal structure of an image-generating unit according to a second embodiment;
Fig. 5 is a flowchart of a procedure for generating an image according to the second embodiment;
Fig. 6 shows a concept of a rule to determine an image-editing process;
Fig. 7 shows a concept of connection among apparatuses for generating images according to a third embodiment;
Figs. 8A to 8C show typical display screens according to the third embodiment; and
Figs. 9A to 9C are block diagrams showing the internal structure of an image-generating unit according to a fourth embodiment.

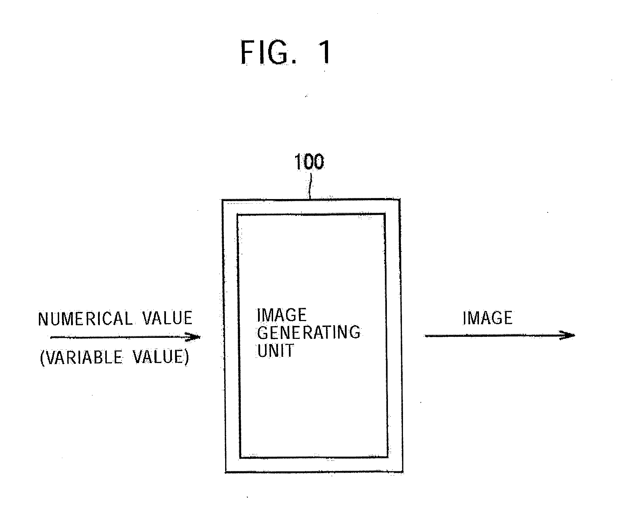

Fig. 1 shows the simplest model of the present invention. An image-generating unit 100 is the core of this model and outputs an image that changes in response to an input of a numerical value. The input and an output have a predetermined relationship, and the output image is varied in accordance with the input numerical value. In the present invention, the image-generating unit 100 deals with a variable value as the input value. Variable values are numerical values that change unpredictably. Examples of the variable values include bio-information, environmental information, and exchange-rate fluctuations. The bio-information is information quantifying human internal changes in, for example, heart rate, breathing, pulse rate, or sweating. The environmental information is information quantifying environmental conditions, such as weather, pressure, temperature, humidity, wind velocity, or the volume of air.

### [First Embodiment]

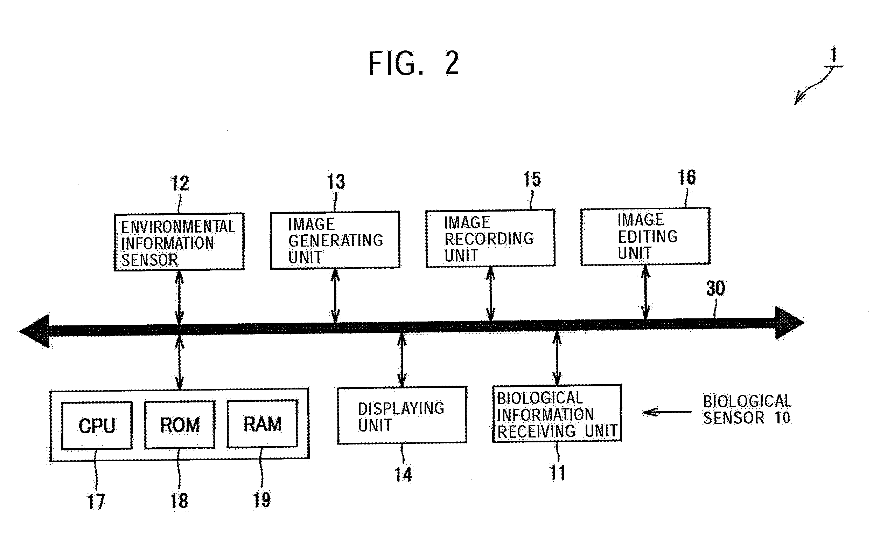

Embodiments of the present invention will be described with reference to the drawings. Fig. 2 shows the internal structure of an apparatus 1 for generating an image according to the present invention. The apparatus 1 includes a bio-information sensor 10 for measuring bio-information, a bio-information receiving unit 11 for receiving bio-information sent from the bio-information sensor 10, an environmental sensor 12 for measuring environmental information, an image-generating unit 13 for generating an image by using bio-information and/or environmental information as variables, a displaying unit 14 for displaying an image generated by the image-generating unit 13, an image-recording unit 15 for recording an image, an image-editing unit 16 for performing an image-editing process on an image, a central processing unit (CPU) 17 for controlling all the other parts of the apparatus 1, a random access memory (RAM) 19 serving as a work area of the CPU 17, a read-only memory (ROM) 18 for storing a program and setting information, and a bus 30 connecting these components.

The bio-information sensor 10 is provided at a part of a human body or at a corner of a room. The bio-information sensor 10 is, for example, a rheometer, an electroencephalograph, an eye-motion sensor, an electrocardiograph, a vibrating gyroscope, an acceleration sensor, a mechanomyograph, a skin-temperature sensor, a body-motion acceleration sensor, a skin-conductance sensor, and a pulsimeter. The rheometer irradiates a human body with infrared radiation and measures the flow of blood in the brain or the blood oxygen concentration by reflection of the infrared radiation. The electroencephalograph measures brain waves, such as α waves, or β waves, on the basis of the electric current passing through the brain. The eye-motion sensor is put on the head and determines the oscillation frequency component of the eyes on the basis of the voltage of the head. The electrocardiograph determines the heart rate on the basis of the electric current passing from the cardiac muscle. The vibrating gyroscope measures the chest activity or the respiration rate on the basis of the angular velocity. The skin-temperature sensor measures the body heat. The skin-conductance sensor measures the amount of sweat on the basis of the electrical skin resistance.

The above-described examples of the bio-information sensor 10 are used for quantitatively measuring internal changes depending on the autonomic nervous system and the central nervous system. Changes in the human body include external ones, which are consciously produced by a human being, such as facial expressions or speeches. Examples of the bio-information sensor 10 for measuring such external variations include a video camera, a microphone, an attitude sensor, and a body-motion sensor. The video camera captures an object in the field of view and can capture the surroundings of a human being and facial expressions of a human being. The microphone can collect human voices. The attitude sensor consists of a plurality of tilt sensors and can determine the posture of a human being by angles of the trunk or extremities.

The environmental sensor 12 acquires environmental information. Examples of the environmental information include the position of a user, weather, temperature, humidity, wind velocity, the volume of air, precipitation, the date and time, and smell. Examples of the environmental sensor 12 include a thermometer, an altimeter, a barometer, a hygrometer, a gas sensor, and a global positioning system (GPS). The environmental information, such as weather, or temperature, can be externally acquired over a communications network, such as the Internet.

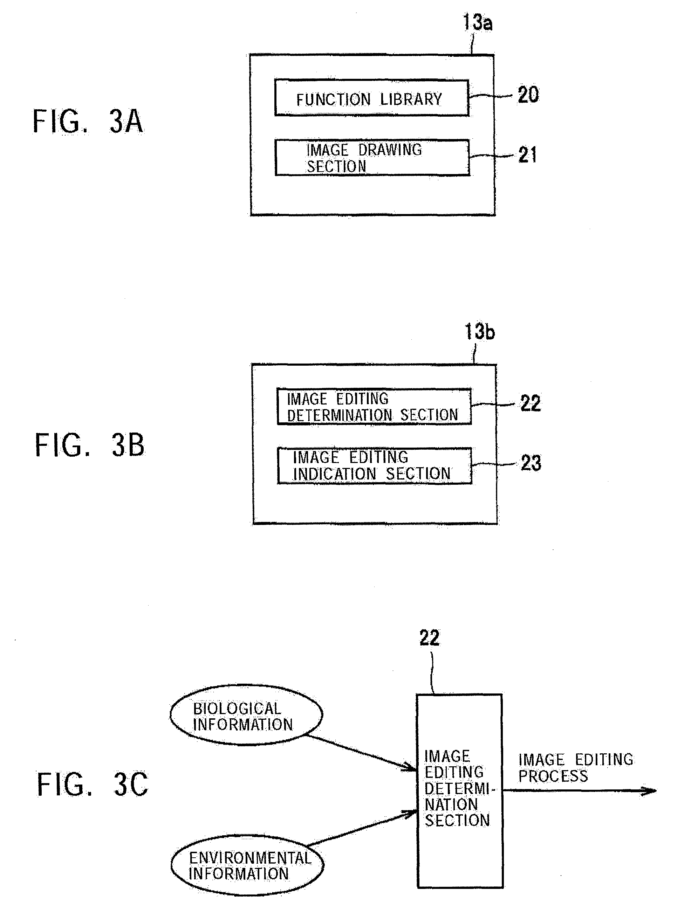

The image-generating unit 13 generates an image by using bio-information and/or environmental information as variables. Typical image generations will now be described. In a first case, as shown in Fig. 3A, an image-generating unit 13a has a function library 20 storing a predetermined function and an image-drawing section 21 for plotting a point on a virtual coordinate system in accordance with the function. A simple instance will be introduced. When bio-information or environmental information is substituted in r of a function (X² + Y² = r²) drawing a circle, a circle with a varying radius is drawn. When an image is created on the basis of elements whose changes are relatively drastic, such as the electrical activity of the heart, or the body motion, the resulting image is such that a circle continually changes its size (shrinks and expands), like animation.

A function may be a complicated one, such as a fractal, or may be an original one. In other words, a function is of any type, as long as it transforms a value (bio-information or environmental information) into a point on a two-dimensional plane or a complex plane. Additionally, the X axis and the Y axis can be converted so that the entire screen can be rotated or moved vertically and horizontally. All parameters, including a variable of a function, an angle of rotation for a screen, and the distance of the movement, can correspond to bio-information and/or environmental information. The number of axes may be increased so as to create a three-dimensional image. In accordance with bio-information and/or environmental information, the color of a circle and a background can be changed. The above-described function is stored in the function library 20.

In a second case, an image is varied by performing an image-editing process on the existing image. As illustrated in Fig. 3B, an image-generating unit 13b has an image-editing determination section 22 for determining an image editing process to be performed and an image-editing indication section 23 for indicating the determination result to the image-editing unit 16. There are various techniques as an image-editing process, examples of which include display, deletion, copy, enlargement, reduction, rotation, fade-in, fade-out, and soft focus. As shown in Fig. 3C, the image-editing determination section 22 outputs the determination of an image-editing process in response to the input of sensor data, such as bio-information, or environmental information.

### [Second Embodiment]

Other methods for generating images will now be described. An image-generating unit 13c calculates parametric data that shows an index of feelings or physical condition on the basis of bio-information or information about feelings, and then, generates image data on the basis of the parametric data. In an instance described below, physical condition and weather condition are calculated as parametric data, and an image of a virtual creature (jellyfish) is subjected to an image-editing process on the basis of these two factors.

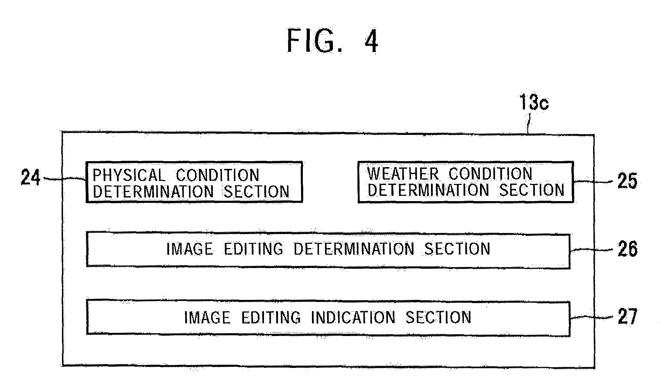

In a second embodiment, as shown in Fig. 4, the image-generating unit 13c has a physical-condition determination section 24 for determining a user's physical condition, a weather-condition determination section 25 for determining weather condition, an image-editing determination section 26 for determining an image-editing process on the basis of the determination result of physical condition and weather condition, and an image-editing indication section 27 for indicating the determination result to the image editing unit 16.

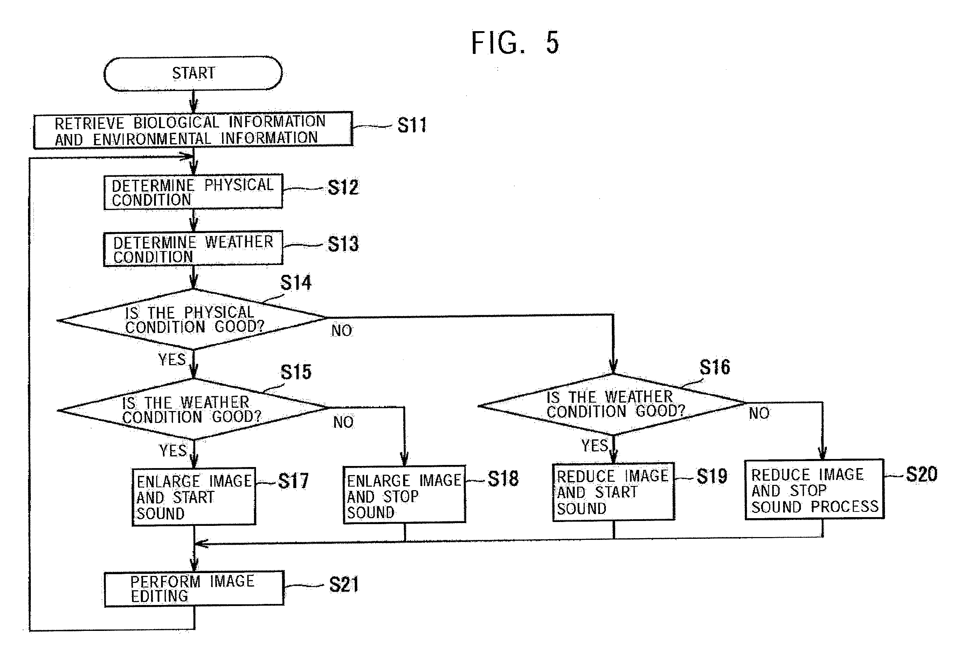

Fig. 5 is a flowchart of a procedure for generating an image. For generating an image, firstly, bio-information measured by the bio-information sensor 10 and environmental information measured by the environmental sensor 12 are output to the image-generating unit 13c (step S11). The physical-condition determination section 24 determines a user's physical condition on the basis of the input bio-information (step S12). A typical determination of the physical condition will be described. The image-generating unit 13 continuously measures a user's body heat, heart rate, and respiration rate and calculates the averages thereof. In general, when people are in poor physical condition, such as, when they are under stress, or when they feel tired all the time, their resting heart rates are higher than normal. When they are in poor physical condition or feel stress, their breathing is shallow and short. The physical-condition determination section 24 determines that, when the body heat, the heart rate, and the respiration rate are substantially the same as those in normal times, physical condition is good and determines that, when the body heat, the heart rate, and the respiration rate are varied widely, physical condition is bad. The process of determination of physical condition is not limited to the above-described process; it may use other existing processes.

The weather-condition determination section 25 determines whether the weather condition is good or bad on the basis of environmental information, such as temperature, wind velocity, humidity, precipitation, or the like. The weather-condition determination section 25 retains temperature and humidity conditions that are comfortable for most people and determines that, when measured temperature or humidity falls far outside the comfort conditions, weather condition is bad. The weather-condition determination section 25 determines that, when the wind is high, or when it rains, weather condition is bad (step S13).

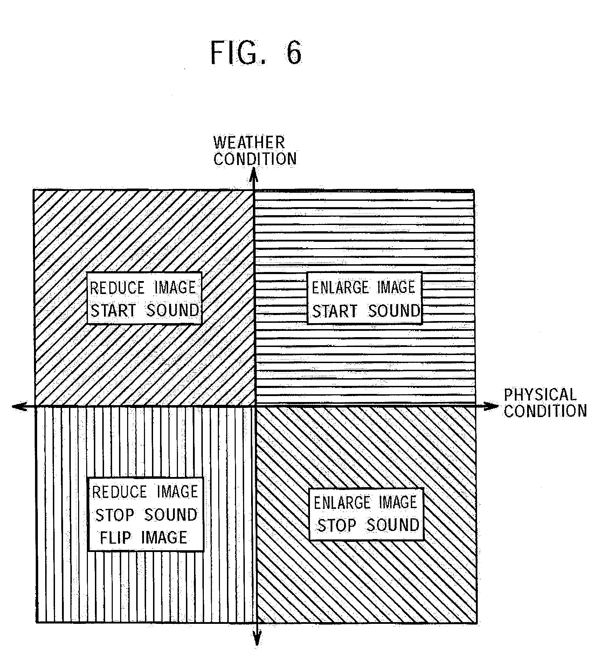

The process of generating an image on the basis of two factors, namely physical condition and weather condition, will now be described. Fig. 6 shows the relationship among the physical condition, the weather condition, and the image-editing process. The image-editing determination section 26 follows a rule shown in this illustration. When the physical condition and the weather condition are good (YES at step S14 and YES at step S15), the image-editing determination section 26 determines that the image is enlarged and the sound is started (step S17). When the physical condition is good and the weather condition is bad (YES at step S14 and NO at step S15), the image-editing determination section 26 determines that the image is enlarged and the sound is stopped (step S18). When the physical condition is bad and the weather condition is good (NO at step S14 and YES at step S16), the image-editing determination section 26 determines that the image is reduced and the sound is started (step S19). When the physical condition and the weather condition are bad (NO at step S14 and NO at step S16), the image-editing determination section 26 determines that the image is reduced and vertically flipped and the sound is stopped (step S20). The point of intersection of the vertical axis and the horizontal axis of Fig. 6 represents average physical condition and average weather condition. A parameter for an image-editing process, such as a scaling factor of an image, or a sound level, changes with the variation from this point.

The image-generating unit 13c outputs the determination of an image-editing process and a parameter in the image-editing determination section 26 to the image-editing unit 16. The image-editing unit 16 varies a reproduced state of an image according to the image-editing process and the parameter (step S21).

In the second embodiment, the apparatus 1 changes an image on the basis of parametric data, indicating physical condition, and provides a meaningful image. The parametric data is not limited to physical condition and may be of other data, such as feelings, emotions, the degree of excitement, the amount of motion, or the like. The image-editing process is not limited. For example, when physical condition is good, the number of images may be increased, or an image may move more actively.

### [Third Embodiment]

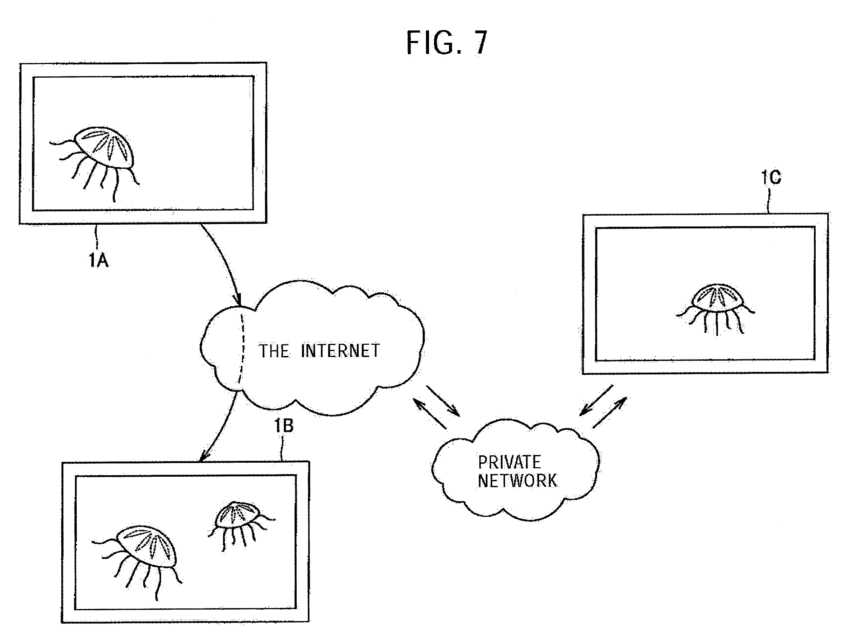

In a third embodiment, the apparatuses for generating images, discussed in the first embodiment and the second embodiment, are connected to a network. In Fig. 7, an apparatus 1A for generating an image and an apparatus 1B for generating an image are connected to the Internet, and an apparatus 1C for generating an image is connected to the Internet via a private network. As such, an apparatus for generating an image is connected to a network, so that it can receive an image or sensor data through other networks. Fig. 8A shows a typical screen when the apparatus 1B displays images 2B after receiving an image 2A.

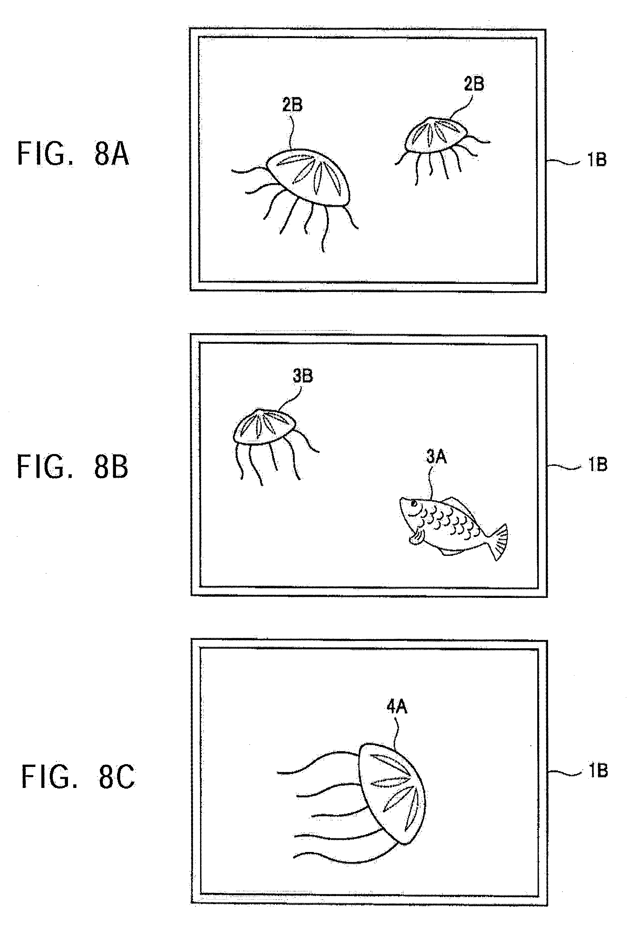

As an alternative to an image, sensor data, including bio-information and environmental information, may be transmitted. Fig. 8B shows a typical screen when the apparatus 1B produces a different virtual creature (tropical fish) 3A on the basis of received sensor data. Only data received externally through a network may be displayed. Fig. 8C shows a typical screen when the apparatus 1B displays an image 4A received from the apparatus 1A.

### [Fourth Embodiment]

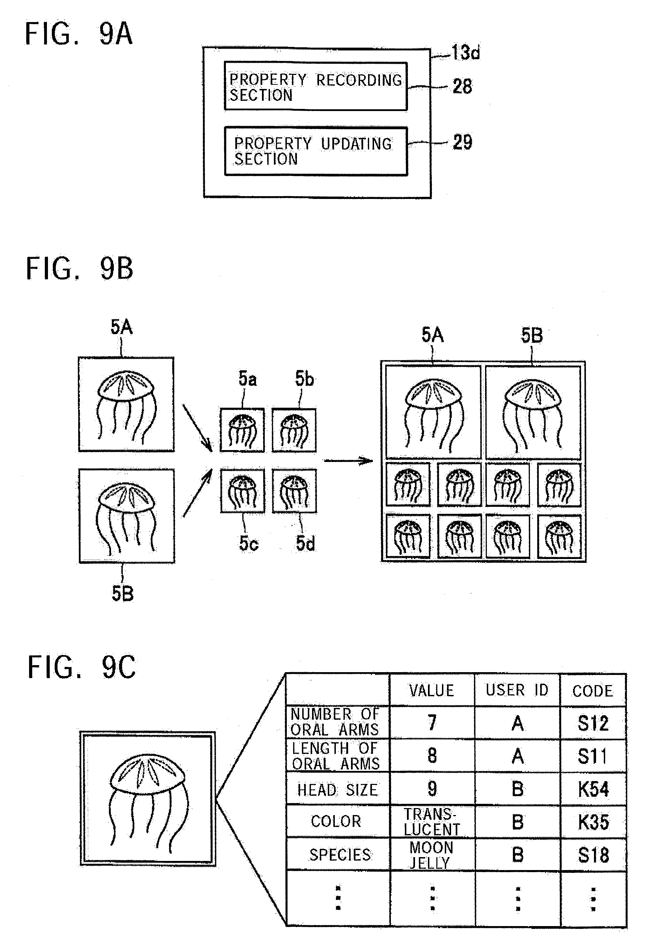

In a fourth embodiment, the apparatus for generating an image described in the third embodiment generates a new image by combining information received from another apparatus for generating an image. In this embodiment, as shown in Fig. 9A, an image-generating unit 13d has a property-recording section 28 for recording a property and a property-updating section 29 for updating a value of a property. Properties are data representing characteristics of a virtual creature (jellyfish) and, as shown in Fig. 9C, examples thereof include species of jellyfish, color of jellyfish, the number of oral arms of jellyfish, the length of oral arms of jellyfish, the head size of jellyfish, the moving speed of jellyfish, and the moving direction of jellyfish. Each property has a user ID and a code indicating a type of bio-information or environmental information.

The property-updating section 29 assigns values on the basis of bio-information and environmental information to properties. In Fig. 9C, blood pressure value of a user A is assigned to the length of the oral arms of the jellyfish. The blood pressure is on the order of 90 mmHg to 200 mmHg. Since the length of each of the oral arms is on the order of 5 cm, the property-updating section 29 corrects the blood pressure value close to the order of the length of the oral arm.

Fig. 9B shows a case in which images of four baby jellyfish 5a to 5d are generated by mixing bio-information and environmental information of two users, A and B. In Fig. 9B, parent jellyfish 5A and 5B are displayed on the same screen as the baby jellyfish 5a to 5d. Therefore, many images can be generated by combining bio-information and environmental information of two or more users.

In the fourth embodiment, two or more users' bio-information and environmental information are combined to produce new parameters for generating new images. A method for producing a parameter is not limited. Properties of baby jellyfish may be assigned averages of bio-information and environmental information. The categories of properties are not limited. The virtual creature is not limited to jellyfish. The produced value may be an argument to the function shown in the first embodiment.

## Claims

1. An apparatus for generating an image comprising:
acquiring means for acquiring a variable value that changes unpredictably;
image-generating means for generating an image on the basis of the variable value; and
displaying means for displaying the generated image.

2. The apparatus for generating an image according to claim 1, wherein the acquiring means includes bio-information measuring means for measuring bio-information as the variable value.

3. The apparatus for generating an image according to either claim 1 or claim 2, wherein the acquiring means includes environmental-information measuring means for measuring environmental information as the variable value.

4. The apparatus for generating an image according to any one of the preceding claims, wherein the acquiring means includes receiving means for receiving the variable value through an external network.

5. The apparatus for generating an image according to any one of the preceding claims, wherein the image-generating means draws the image on a virtual coordinate system by using the variable value acquired by the acquiring means as an argument.

6. The apparatus for generating an image according to any one of the preceding claims, further comprising:
image-recording means for recording an image;
wherein the image-generating means determines an image-editing process on the image recorded by the image-recording means, on the basis of the variable value, and performs the image-editing process on the recorded image on the basis of the determination.

7. The apparatus for generating an image according to any one of the preceding claims, wherein the image-generating means calculates parametric data on the basis of the variable value and generates an image on the basis of the parametric data.

8. The apparatus for generating an image according to any one of the preceding claims, further comprising:
sound-generating means for generating a sound that fits the image generated by the image-generating means; and
sound-outputting means for outputting the sound.

9. A method for generating an image, the method comprising:
an acquiring step of acquiring a variable value that changes unpredictably;
an image-generating step of generating an image on the basis of the variable value; and
a displaying step of displaying the generated image on displaying means.

10. The method for generating an image according to claim 9, wherein the acquiring step includes measuring bio-information as the variable value.

11. The method for generating an image according to either claim 9 or claim 10, wherein the acquiring step includes measuring environmental information as the variable value.

12. The method for generating an image according to any one of claims 9 to 11, wherein the acquiring step includes receiving the variable value through an external network.

13. The method for generating an image according to any one of claims 9 to 12, wherein the image-generating step includes drawing the image on a virtual coordinate system by using the variable value acquired in the acquiring step as an argument.

14. The method for generating an image according to any one of claims 9 to 13, wherein the image-generating step includes calculating parametric data on the basis of the variable value and generating an image on the basis of the parametric data.

15. The method for generating an image according to any one of claims 9 to 14, further comprising:
a sound-generating step of generating a sound that fits the image generated in the image-generating step; and
a sound-outputting step of outputting the sound.

16. A computer program comprising program code means that, when executed on a computer system, instructs a system to carry out the steps according to any one of claims 9 to 15.

17. A computer readable storage medium having recorded thereon program code means that, when executed on a computer system, instructs a system to carry out the steps according to any one of claims 9 to 15.
